(19) **Europäisches Patentamt**
**European Patent Office**
**Office européen des brevets**

(11) **EP 4 454 202 B1**

(12) **EUROPÄISCHE PATENTSCHRIFT**

(45) Veröffentlichungstag und Bekanntmachung des Hinweises auf die Patenterteilung:
**21.01.2026 Patentblatt 2026/04**

(21) Anmeldenummer: **22836214.1**

(22) Anmeldetag: **19.12.2022**

(51) Internationale Patentklassifikation (IPC):
**H04L 9/06** *(2006.01)* **G06N 3/02** *(2006.01)*

(52) Gemeinsame Patentklassifikation (CPC):
**H04L 9/06; G06N 3/044; G06N 3/09**

(86) Internationale Anmeldenummer:
**PCT/EP2022/086681**

(87) Internationale Veröffentlichungsnummer:
**WO 2023/117924 (29.06.2023 Gazette 2023/26)**

(54) **VERFAHREN ZUR VERSCHLÜSSELUNG UND ENTSCHLÜSSELUNG VON NUTZDATEN**

METHOD FOR ENCODING AND DECODING USER DATA

PROCÉDÉ DE CHIFFREMENT ET DE DÉCHIFFREMENT DE DONNÉES UTILES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **20.12.2021 DE 102021133923**

(43) Veröffentlichungstag der Anmeldung:
**30.10.2024 Patentblatt 2024/44**

(73) Patentinhaber:
- **Deutsches Zentrum für Luft- und Raumfahrt e.V.**
  **53227 Bonn (DE)**
- **Köglmayr, Daniel**
  **81543 München (DE)**

(72) Erfinder:
- **RÄTH, Christoph**
  **85386 Eching (DE)**
- **KÖGLMAYR, Daniel**
  **81543 München (DE)**

(74) Vertreter: **dompatent**
**Partnerschaft von**
**Patentanwälten und Rechtsanwälten mbB**
**Deichmannhaus am Dom**
**Bahnhofsvorplatz 1**
**50667 Köln (DE)**

(56) Entgegenhaltungen:
**US-A1- 2020 019 843   US-A1- 2020 304 285**

- **VOLNA EVA ET AL: "Cryptography Based On Neural Network", ECMS 2012 PROCEEDINGS EDITED BY: K. G. TROITZSCH, M. MOEHRING, U. LOTZMANN, 29 May 2012 (2012-05-29), pages 386 - 391, XP093032956, Retrieved from the Internet <URL:https://www.scs-europe.net/conf/ecms2012/ecms2012%20accepted%20papers/is_ECMS_0113.pdf> DOI: 10.7148/2012-0386-0391**

EP 4 454 202 B1

## Beschreibung

Die vorliegende Erfindung betrifft ein Verfahren zur Verschlüsselung von Nutzdaten, wobei es sich insbesondere bei den Nutzdaten um Bilder handelt. Weiterhin betrifft die vorliegende Erfindung ein Verfahren zur Entschlüsselung von derart verschlüsselten Nutzdaten sowie ein Verfahren zur Übertragung derart verschlüsselter Nutzdaten.

Auf Grund der schnellen Entwicklung von digitaler Kommunikation und digitaler Informationsübertragung spielen Verschlüsselungsverfahren eine grundlegende Rolle, um sichere und damit nutzbare digitale Technologien zu gewährleisten und Nutzdaten zwischen einem Sender und einem Empfänger zu übertragen. Hierbei wird intensiv an innovativen Verschlüsselungsverfahren geforscht, um effiziente Kodierung der vermehrt auftretenden Informationsformen, wie Audio, Bild oder Video zu ermöglichen.

Dabei sind (bekannte) Verschlüsselungsverfahren für Audio, Bild oder Videoteilweise unsicher, da ein Teil der Nutzdaten in unzureichend verschlüsselter Form als Cipher-Information vom Sender an den Empfänger übertragen wird. Wird jedoch eine ausreichend hohe Verschlüsselung der Nutzdaten gewählt, sinkt oft die Effizienz, sodass die Verschlüsselungsgeschwindigkeit nicht ausreicht, um eine brauchbare Verschlüsselung bereitzustellen, welche die stetig steigende Menge an zu verschlüsselnden Nutzdaten bewältigen könnte. Weiterhin kann die Reproduzierbarkeit der Nutzdaten durch den Empfänger oft beschränkt sein, sodass bei Störungen der übertragenen Cipher-Informationen die Nutzdaten nicht oder nur unzureichend rekonstruiert bzw. entschlüsselt werden können.

Aufgabe der vorliegenden Erfindung ist es ein Verschlüsselungsverfahren zu schaffen, welches effizient Nutzdaten sicher verschlüsselt und eine Toleranz gegenüber Störungen während des Übertragungsvorganges aufweist.

Die Aufgabe wird gelöst durch ein Verfahren zur Verschlüsselung von Nutzdaten gemäß Anspruch 1, ein Verfahren zur Entschlüsselung von Nutzdaten gemäß Anspruch 10 sowie ein Verfahren zur verschlüsselten Übertragung von Nutzdaten gemäß Anspruch 12.

Das erfindungsgemäße Verfahren zur Verschlüsselung von Nutzdaten weist die Schritte auf:

> Bereitstellen eines Schlüssels, wobei insbesondere der Schlüssel ein Vektor oder eine Matrix ist;
> Bereitstellen eines Netzwerks mit N Knoten;
> Bereitstellen von Nutzdaten;
> Trainieren des Netzwerks unter Eingabe des Schlüssels auf die Nutzdaten; und Erstellen einer Cipher-Information aus den Gewichtungen der Knoten und insbesondere den Gewichtungen der Knoten der Ausgabeschicht des Netzwerks.

Dabei handelt es sich bei dem Netzwerk beispielsweise um ein neuronales Netzwerk und insbesondere um ein rekurrentes Netzwerk mit N Knoten. Insbesondere weist das Netzwerk eine Eingabeschicht auf und eine Ausgabeschicht. Der Schlüssel lässt sich dabei über die Eingabeschicht auf das Netzwerk anwenden. Das Netzwerk wird unter Eingabe des Schlüssels auf die Nutzdaten trainiert, sodass der Schlüssel auf die Nutzdaten mittels des Netzwerks gemapped wird. Dabei werden die Gewichtungen der Knoten des Netzwerks angepasst, um eine korrekte Wiedergabe der Nutzdaten zu erhalten. Aus den Gewichtungen der Knoten des Netzwerks wird eine Cipher-Information gebildet, welche sodann an den Empfänger übertragen werden kann. Dabei sind für neuronale Netzwerke die Gewichtungen des neuronalen Netzes die Cipher-Information bzw. werden aus diesen erstellt. Bei Reservoir Computing ist das gelernte Mapping, also die Gewichtungen der Ausgabeschicht, der spaltenweise fixierten Gewichtungen des Netzwerkes auf die Nutzdaten die Cipher-Information bzw. wird aus diesen erstellt. Dabei ist ersichtlich, dass die Cipher-Informationen zwar anhand der Nutzdaten gebildet sind, jedoch keine Information über die Nutzdaten oder Teile der Nutzdaten selbst enthalten. Hierdurch wird die Sicherheit der Verschlüsselung deutlich erhöht.

Vorzugsweise handelt es sich bei dem Schlüssel um einen Vektor oder eine Matrix, wie beispielsweise ein Bild oder einen Frame eines Bilder-Streams bzw. Videos. Dabei werden die Pixelwerte des Bildes als Schlüssel verwendet. Das Verfahren weist dabei eine starke Sensitivität auf gegenüber Änderungen des Bildes, welches als Schlüssel herangezogen wird.

Insbesondere handelt es sich bei der Eingabeschicht des Netzwerkes um eine Matrix bzw. einen Vektor mit Zeilendimension entsprechend der Anzahl der Knoten N des Netzwerkes und einer Spaltendimension entsprechend der Zeilendimension des Schlüssels. Vorzugsweise werden die Gewichtungen der Eingabeschicht zufällig gewählt und bleiben fixiert. Alternativ lässt sich die Dimensionsveränderung der Zeilendimension des Schlüssels durch eine Liste von Funktionen erzeugen.

Aufgrund der Verwendung eines Bildes/Matrix als Schlüssel ergibt sich dabei eine Schlüssellänge entsprechend der Anzahl der Pixel des Bildes. Weist das als Schlüssel verwendete Bild eine Größe von 512x512 Pixel auf, so ergibt sich hieraus eine Schlüssellänge von $512^2$. Zusätzlich wird die Zeilendimension des Schlüssels durch die Eingabeschicht des Netzwerkes mit N Knoten entsprechend erweitert, sodass sich eine effektive Schlüssellänge von N*512 ergibt. Der resultierende Schlüsselraum macht brute-force Attacken unmöglich. Um den Schlüssel zu erraten, müssen die entsprechenden Netzwerkgewichtungen als bits in richtiger Reihenfolge erraten werden. Daraus ergeben sich $2^{bits(512*N)} = 2^{(32*512*N)}$ Möglichkeiten.

Die Aufteilung in Schlüssel und Netzwerk ermöglicht, dass der Schlüssel bzw. das Bild oder Matrix von der Zeilendimension (also auch Datenmenge) beliebig kleiner sein kann als die Dimension des Netzwerks. Am Ende entsteht durch Anwendung des Schlüssels auf die Eingabeschicht des Netzwerkes in jedem Fall ein Schlüsselraum von (Anzahl Netzwerkknoten N x Anzahl der Spalten der Nutzdaten). Dies hat praktische und anwendungsfreundliche Eigenschaften, sodass zum Beispiel ein einfacher Wechsel des Schlüssels erfolgen kann, ohne die Übertragung großer Datenmengen.

Insbesondere werden die Spaltenvektoren des Schlüssels durch die Eingabeschicht auf die Dimension des Netzwerkes erweitert und daraufhin auf das Netzwerk angewandt und mittels einer Updatevorschrift zu den Reservoir States transformiert. Die so spaltenweise erzeugten Reservoir States bilden jeweils die neuen Gewichtungen des Netzwerkes. Diese werden dann auf die Nutzdaten beispielsweise mittels Ridge Regression trainiert. Alle Reservoir States, welche dann auf die Nutzdaten gemapped werden, besitzen die Dimension (Anzahl Netzwerkknoten N x Anzahl der Spalten der Nutzdaten).

Ohne Kenntnis des Schlüssels und/oder des Netzwerks ist eine Entschlüsselung bzw. Reproduktion der Nutzdaten nicht möglich.

Aufgrund der Verwendung eines schnell lernenden Algorithmus wie Ridge Regression und eines Netzwerkes zur Verschlüsselung der Nutzdaten, wird eine effiziente und sichere Verschlüsselung erreicht, welche schnell und zuverlässig die Nutzdaten verschlüsselt.

Vorzugsweise handelt es sich bei den Nutzdaten um ein Bild oder ein oder mehrere Frames eines Bilder-Streams bzw. Videos oder eine Audiodatei. Insbesondere handelt es sich bei den Nutzdaten um einen Farbkanal eines Bildes. Somit kann eine getrennte Verschlüsselung der einzelnen Farbkanäle erfolgen. Dabei sind diese Nutzdaten insbesondere verschieden vom Schlüssel und unabhängig davon. Insbesondere bei der Verwendung eines Bildes als Schlüssel erfolgt somit eine Verschlüsselung der Nutzdaten, welche wiederum Bilder oder Frames eines Bilder-Streams sind, anhand eines Bildes. Allerdings ist die vorliegende Erfindung nicht beschränkt auf eine bestimmte Art der Nutzdaten. Somit kann mit der vorliegenden Erfindung jede Art von Nutzdaten verschlüsselt werden, sofern die Nutzdaten in Vektorform oder Matrixform vorliegen oder entsprechend angeordnet werden.

Vorzugsweise weist das Netzwerk mehr als 30 und insbesondere mehr als 500 Knoten auf. Insbesondere führt die Verwendung eines großen Netzwerks zu einer Erhöhung der Sicherheit, da mehr als Cipher-Information zu übertragende Zustände möglich sind.

Vorzugsweise ist die Anzahl N der Knoten des Netzwerks größer als die Zeilengröße. Durch die hierdurch erzeuge Redundanz wird eine Fehlerreduzierung erreicht bei der Verschlüsselung und Entschlüsselung der Nutzdaten.

Vorzugsweise wird das Netzwerk trainiert mittels Ridge Regression.

Vorzugsweise wird das Netzwerk spaltenweise trainiert. Dabei wird vorzugsweise der Schlüssel spaltenweise angewendet auf das Netzwerk zum Trainieren der Ausgabeschicht des Netzwerkes auf eine entsprechende Spalte der Nutzdaten. Hierbei wird insbesondere $\|W_{out}r_i - m_i\|^2 + \lambda\|W_{out}\|^2$ minimiert, wobei $r_i$ die Gewichtungen der Knoten des Netzwerks nach Anwendung der $i$-ten Spalte des Schlüssels, $W_{out}$ die Gewichtungen der Ausgabeschicht des Netzwerkes, $m_i$ die Spalten der Nutzdaten und $\lambda$ ein Regularisierungsfaktor bezeichnen. Somit wird der Schlüssel spaltenweise angewendet auf das Netzwerk zur Erzeugung der Gewichtungen $r_i$ der Knoten des Netzwerks, welche nach dem Training der Ausgabeschicht des Netzwerkes mittels der optimierten Gewichtungen $W_{out}$ auf die $i$-te Spalte der Nutzdaten $m_i$ gemappt werden können. Die Gewichtungen $W_{out}$ der Knoten der Ausgabeschicht stellen dabei die Cipher-Information dar, welche sodann an den Empfänger übertragen wird.

Somit weist die Cipher-Information eine Dimension entsprechend (Spaltenzahl der Nutzdaten)xN auf.

Insbesondere weist der Schlüssel eine identische Spaltenzahl auf wie die Nutzdaten.

Vorzugsweise erfolgt ein Initialisieren des Netzwerks für die Verschlüsselung mit Zufallsgewichtungen.

Insbesondere erfolgt vor jedem spaltenweisen Trainieren ein Update der Netzwerkgewichtungen mittels einer Updatevorschrift, welche vorzugsweise vorhergehende Gewichtungen des Netzwerkes mit einbezieht. Beim Updaten der Netzwerkgewichtungen bleibt insbesondere die Netzwerktopologie vorzugsweise identisch. Dabei wird insbesondere für den Sender und den Empfänger dieselbe Updatevorschrift verwendet. Die Updatevorschrift kann dabei implementiert sein als Funktion, welche einen funktionalen Zusammenhang zwischen dem Schlüssel und jeweiligen Netzwerkgewichtungen bereitstellt. Alternativ hierzu kann die Updatevorschrift implementiert sein als Zuordnung, welche bei Eingabe des Schlüssels die jeweilige Gewichtung auf einen Wert in einem Zielraum der Zuordnung abbildet. Dabei können bevorzugt die Werte des Zielraums statistisch verteilt sein oder Rauschen darstellen. Hierdurch erhöht sich die Sicherheit des Verfahrens, da eine Bestimmung der Updatevorschrift ohne Kenntnis der genutzten Zuordnung nicht möglich ist.

Weiterhin betrifft die vorliegende Erfindung ein Verfahren zur Entschlüsselung von Nutzdaten, insbesondere von Bildern, mit den Schritten:

Bereitstellen einer Cipher-Information, welche nach dem vorstehend beschriebenen Verfahren verschlüsselt sind,
Bereitstellen desselben Schlüssels;
Bereitstellen desselben Netzwerks; und
Anwenden des Schlüssels auf das Netzwerk unter Berücksichtigung der Cipher-Information zur Entschlüsselung der Nutzdaten.

Somit wird dem Empfänger die Cipher-Information bereitgestellt. Anhand desselben Schlüssels, welcher bereits für die Verschlüsselung genutzt wurde, und demselben Netzwerk, kann sodann unter Anwendung des Schlüssels auf das Netzwerk unter Berücksichtigung der Cipher-Information die Nutzdaten aus den Cipher-Informationen entschlüsselt werden. Dabei handelt es sich bei demselben Netzwerk um ein Netzwerk mit einer identischen Topologie und Knotenzahl.

Vorzugsweise erfolgt das Anwenden des Schlüssels auf das Netzwerk unter Berücksichtigung der Cipher-Information zur Entschlüsselung der Nutzdaten mittels Matrixmultiplikation der Netzwerkgewichtungen mit den Cipher-Informationen.

Vorzugsweise erfolgt ein Initialisieren des Netzwerks für die Entschlüsselung mit Zufallsgewichtungen, welche insbesondere identisch sind zu den Gewichtungen der Initialisierung der Verschlüsselung.

Insbesondere erfolgt ein spaltenweise identisches Update der Gewichtungen und Topologie des Netzwerkes, wie es ebenfalls für die Erzeugung der Cipher-Information bei der Verschlüsselung herangezogen wurde. Somit erfolgt ein Updaten der Netzwerkgewichtungen in dem Netzwerk des Empfängers anhand derselben Updatevorschrift, welche auch bei der Verschlüsselung vom Sender angewendet werden.

Weiterhin betrifft die vorliegende Erfindung ein Verfahren zur verschlüsselten Übertragung von Nutzdaten mit den Schritten:

> Erzeugen von Cipher-Informationen welche nach dem vorstehend beschriebenen Verfahren verschlüsselt sind;
> Übertragen der Cipher-Informationen an einen Empfänger mittels einen Übertragungskanals;
> Entschlüsseln der Nutzdaten gemäß dem vorstehend beschriebenen Verfahren zur Entschlüsselung von Nutzdaten.

Vorzugsweise handelt es sich bei dem Übertragungskanal um einen kabelgebunden Übertragungskanal, wie beispielsweise LAN, oder einen kabellosen Übertragungskanal, wie beispielswiese 3G, 4G, 5G, Wi-Fi, WLAN, Bluetooth oder dergleichen.

Weiterhin betrifft die vorliegende Erfindung eine Vorrichtung zur Verschlüsselung von Nutzdaten. Dabei ist die Vorrichtung ausgebildet zur Durchführung des Verfahrens zur Verschlüsselung von Nutzdaten wie vorstehend beschreiben.

Vorzugsweise weist die Vorrichtung einen Prozessor auf und einen Speicher zur Speicherung von Instruktionen, die, wenn ausgeführt durch den Prozessor, das vorstehend beschriebene Verfahren zur Verschlüsselung von Nutzdaten durchführt.

Vorzugsweise weist die Vorrichtung eine Hardware-Implementierung des Netzwerkes und insbesondere des Reservoir Netzwerkes auf. Vorzugsweise umfasst die Hardware-Implementierung ebenfalls die Eingabeschicht.

Weiterhin betrifft die vorliegende Erfindung eine Vorrichtung zur Entschlüsselung von Nutzdaten. Dabei ist die Vorrichtung ausgebildet zur Durchführung des Verfahrens zur Entschlüsselung von Nutzdaten wie vorstehend beschreiben.

Vorzugsweise weist die Vorrichtung einen Prozessor auf und einen Speicher zur Speicherung von Instruktionen, die, wenn ausgeführt durch den Prozessor, das vorstehend beschriebene Verfahren zur Entschlüsselung von Nutzdaten durchführt.

Vorzugsweise weist die Vorrichtung eine Hardware-Implementierung des Netzwerkes und insbesondere des Reservoir Netzwerkes auf. Vorzugsweise umfasst die Hardware-Implementierung ebenfalls die Eingabeschicht. Dabei ist die Hardware-Implementierung des Netzwerkes der Vorrichtung zur Entschlüsselung identisch ausgebildet zu der Hardware-Implementierung des Netzwerkes der Vorrichtung zur Verschlüsselung.

Weiterhin betrifft die vorliegende Erfindung ein System zur Übertragung verschlüsselter Nutzdaten. Dabei weist das System die vorstehend beschriebene Vorrichtung zur Verschlüsselung von Nutzdaten und die Vorrichtung zur Entschlüsselung auf, welche durch einen Übertragungskanal miteinander verbunden sind zur Übertragung der Cipher-Informationen.

Nachfolgend wird die Erfindung anhand bevorzugter Ausführungsformen unter Bezugnahme auf die beigefügten Zeichnungen näher erläutert.

Es zeigen:

Figur 1 ein Verlaufsdiagramm des Verfahrens zur Verschlüsselung von Nutzdaten,

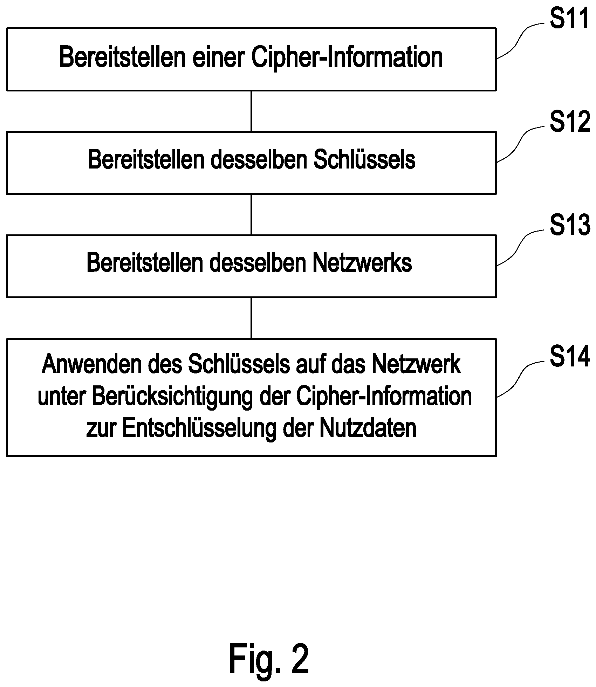

Figur 2 ein Verlaufsdiagramm zur Entschlüsselung von Nutzdaten,

Figur 3 eine schematische Darstellung des Verschlüsselungsverfahrens,

Figur 4A-4C Beispiele für Nutzdaten und deren jeweilige Cipher-Information,

Figur 5 Simulationsergebnisse des Verfahrens gemäß der vorliegenden Erfindung und

Figure 6 ein Beispiel für eine Entschlüsselung mit nichtübereinstimmenden Schlüsseln.

Die vorliegende Erfindung stellt ein Verfahren zur Verschlüsselung und Entschlüsselung von Nutzdaten bereit. Das Verfahren zur Verschlüsselung von Nutzdaten weist die Schritte auf:

> In Schritt S01 wird ein Schlüssel bereitgestellt, wobei insbesondere der Schlüssel ein Bild ist.

In Schritt S02 wird ein Netzwerk mit N Knoten und die Eingabeschicht bereitgestellt.

In Schritt S03 werden Nutzdaten bereitgestellt.

In Schritt S04 wird das Netzwerk trainiert unter Eingabe des Schlüssels auf die Nutzdaten.

In Schritt S05 werden Cipher-Information erstellt aus den Gewichtungen der Knoten des Netzwerks.-

Dabei handelt es sich bei dem Schlüssel insbesondere um ein Bild, ein Frame eines Bilder-Streams oder ein Schlüsselobjekt, dessen Abbildung wiederum als Schlüssel verwendet werden kann. Allgemein handelt es sich bei dem Schlüssel um einen Vektor oder eine Matrix, die sowohl für die Verschlüsselung als auch für die Entschlüsselung bekannt ist und genutzt wird. Das Netzwerk erweitert den Schlüssel auf chaotische und nicht lineare Art und Weise.

Insbesondere werden die Cipher-Informationen, welche aus den Gewichtungen der Knoten des Netzwerks erstellt werden, an einen Empfänger übermittelt. Somit werden keine Informationen über die Nutzdaten selbst übertragen, wodurch die Sicherheit der Verschlüsselung erhöht wird. Ohne Kenntnisse des Schlüssels und des Netzwerks bzw. der Topologie des Netzwerks ist eine Bestimmung der Nutzdaten aus den Cipher-Informationen nicht möglich. Insbesondere verwenden sowohl der Sender zur Verschlüsselung der Nutzdaten als auch der Empfänger zur Entschlüsselung der Daten dieselben Gewichtungen, welche zur Initialisierung des Netzwerks gewählt werden, sowie dieselbe Updatevorschrift der Netzwerkgewichtungen.

Dabei handelt es sich bei den Nutzdaten insbesondere um ein Bild oder ein oder mehrere Frames eines Bilder-Streams. Insbesondere handelt es sich bei den Nutzdaten um einen Farbkanal eines Bildes oder Frames.

Die Cipher-Informationen werden an einen Empfänger übertragen zur Entschlüsselung. Dabei weist das Verfahren zur Entschlüsselung der Nutzdaten die folgenden Schritte auf:

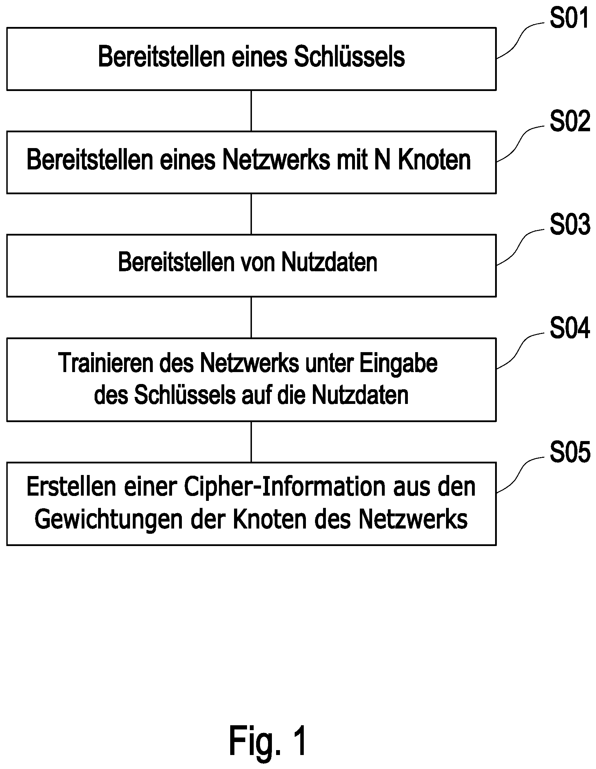

In Schritt S11 werden Cipher-Information bereitgestellt, welche nach dem Verfahren gemäß der Figur 1 erzeugt wurde.

In Schritt S12 wird derselbe Schlüssel bereitgestellt, welcher auch für die Verschlüsselung genutzt wurde.

In Schritt S13 wird dasselbe Netzwerk bereitgestellt, welches bereits für die Verschlüsselung genutzt wurde.

In Schritt S14 wird der Schlüssel auf das Netzwerk angewendet unter Berücksichtigung der Cipher-Information zur Entschlüsselung der Nutzdaten.

Somit teilen sich der Sender der Cipher-Information und der Empfänger der Cipher-Information sowohl einen identischen Schlüssel, ein identisches Netzwerk und dessen Eingabeschicht, sodass aus den Cipher-Informationen die Nutzdaten entschlüsselt werden können. Hierbei kann es sich bei dem identischen Netzwerk nur um die Topologie des Netzwerkes handeln. Zusätzlich können sodann die Gewichtungen, welche zur Initialisierung des Verschlüsselungs-Netzwerks herangezogen werden, an den Empfänger übertragen werden und dort genutzt werden, um ebenfalls das Entschlüsselungsnetzwerk zu Initialisieren. Alternativ umfasst das identische Netzwerk zusätzlich zur Topologie ebenfalls die Initialisierungsgewichtungen. Weiterhin nutzen sowohl der Sender zur Verschlüsselung der Nutzdaten als auch der Empfänger zur Entschlüsselung der Nutzdaten dieselbe Updatevorschrift zur Anpassung der Gewichtungen der Knoten des Netzwerks bei Anwendung des Schlüssels auf die Eingabeschicht.

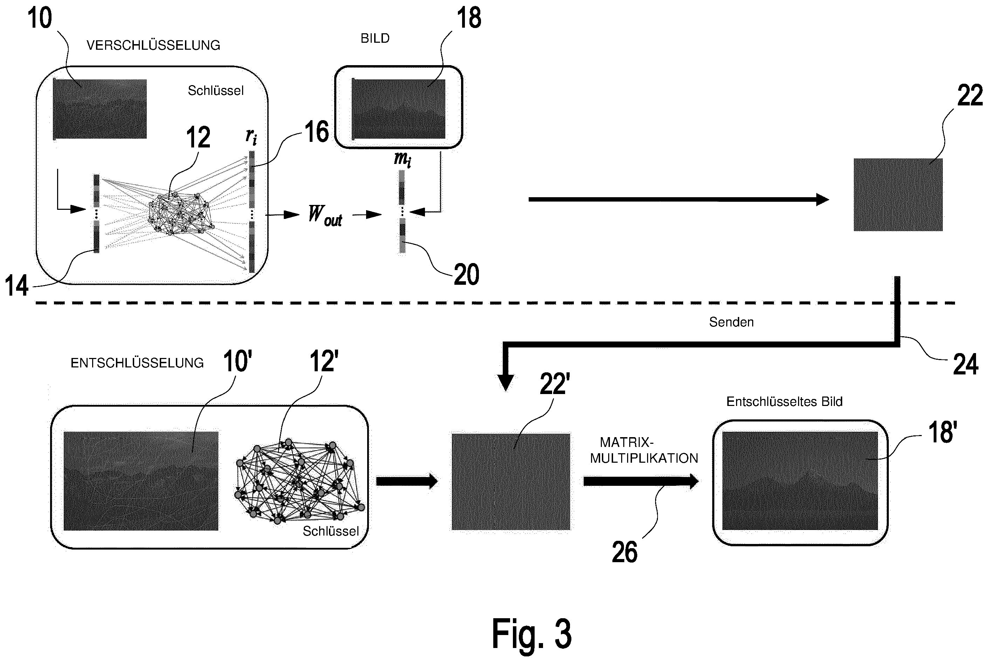

Figur 3 zeigt das erfindungsgemäße Verfahren zur Verschlüsselung und Entschlüsselung von Nutzdaten in einer schematischen Darstellung. Bei den Nutzdaten 18 handelt es sich um ein Bild mit Spaltenvektoren $m_i$. Ebenso handelt es sich beim dem Schlüssel 10 um ein Bild ebenfalls mit Spaltenvektoren. Die Spalten des Schlüssels 10 werden auf ein Netzwerk 12 mit einer Vielzahl von N Knoten angewendet. Hierzu wird zunächst das Netzwerk 12 mit Zufallsgewichtungen initialisiert. Das Netzwerk 12 hat eine Ausgabe $W_{out}$. Weiterhin werden Gewichtungen der Knoten des Netzwerks 12 als Spaltenvektor $r_i$ zusammengefasst. Dabei beträgt die Länge des Spaltenvektors $r_i$ gerade der Anzahl N der **Knoten des** Netzwerks 12. Bei dem Netzwerk 12 handelt es sich um ein neuronales Netzwerk oder ein rekurrentes Netzwerk oder dergleichen.

Nachfolgend wird die Ausgabe des Netzwerks 12 $W_{out}$ trainiert auf die Spalten $m_i$ der Nutzdaten 18 beispielsweise mittels Reservoir-Computing oder Ridge Regression. Dabei kann beispielsweise der Ausdruck $\|W_{out}ri - m_i\|^2 + \lambda\|W_{out}\|^2$ minimiert werden, wobei $\lambda$ ein Regularisierungsfaktor bezeichnet, welcher insbesondere zwischen $10^{-1}$ und $10^{-8}$ gewählt werden kann, wobei die Qualität der entschlüsselten Nutzdaten steigt bei kleinem $\lambda$.

Handelt es sich bei den Nutzdaten 18 um ein Bild mit einer Auflösung von 512x512 Pixeln und weist das Netzwerk 12 600 Knoten auf, so ergibt sich für die Cipher-Information 22 eine Dimension von 512x600. Hierzu wird spaltenweise für jede Spalte des Schlüssels 10 das Netzwerk 12 trainiert auf die jeweilige Spalte des Bildes der Nutzdaten 18. Die Gewichtungen 16 des trainierten Netzwerks werden zu den Cipher-Informationen 22 zusammengefasst. Somit können aus den Reservoir-Zuständen der Spaltenvektoren des Schlüssels die entsprechenden Spaltenvektoren des Bildes ermittelt werden durch ein entsprechendes Training der Gewichte des Netzwerks 12 für die jeweiligen Spalten.

Die Cipher-Informationen 22 werden sodann an einen Empfänger übertragen mittels eines Übertragungskanals 24. Bei dem Übertragungskanal kann es sich um jeden beliebigen Übertragungskanal handeln, wie beispielsweise eine drahtgebundene Übertragung beispielsweise über das Internet, LAN oder eine drahtlose Übertragung beispielsweise per WiFi, 3G, 4G, 5G oder dergleichen.

Für die Entschlüsselung der Nutzdaten benötigt der Empfänger einen identischen Schlüssel 10' und ein identisches Netzwerk und dessen Eingabeschicht 12', wobei das identische Netzwerk 12' eine identische Topologie und Knotenanzahl sowie insbesondere identische Anfangsgewichtung zu dem Netzwerk 12 des Senders aufweist. Weiterhin verwenden insbesondere Sender und Empfänger dieselbe Updatevorschftist. Zur Entschlüsselung der Nutztaten werden die Spalten des Schlüssels 10' auf das Netzwerk 12' angewendet und die dabei ermittelten Reservoir-Zustände werden mittels Matrixmultiplikation 26 auf die übertragenen Cipher-Informationen 22' übertragen. Hierdurch kann mittels einfacher Matrixmultiplikation 26 das Bild der übertragenen Nutzdaten 18' aus den übertragenen Cipher-Informationen 22' entschlüsselt werden.

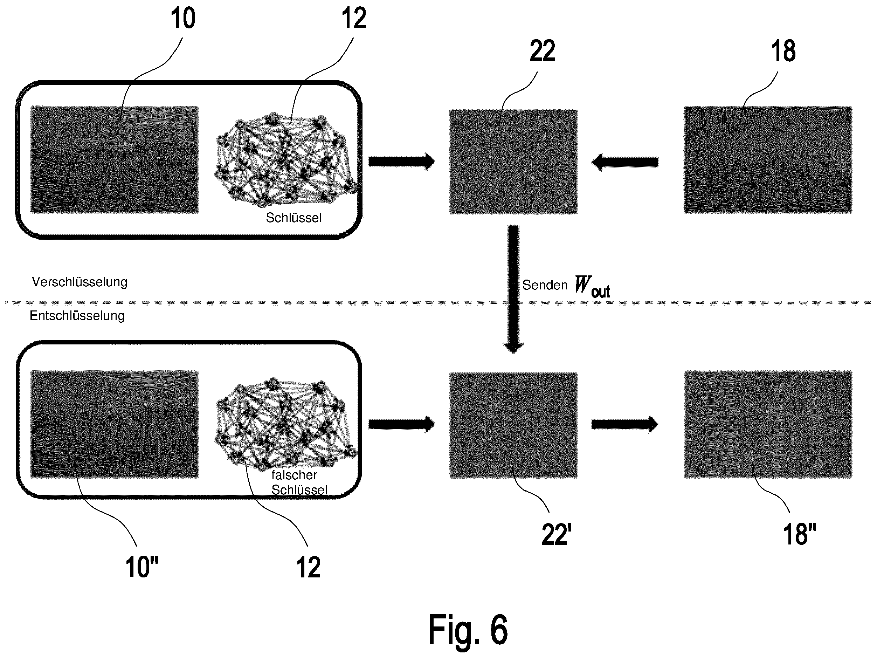

Fig. 6 zeigt ein Beispiel, bei dem der Schlüssel 10" zur Entschlüsselung geringfügig abweicht von dem Schlüssel 10, der zur Verschlüsselung genutzt wurde. Wie aus der Fig. 6 ersichtlich können hierbei die Nutzdaten 18 nicht entschlüsselt werden und Bild 18" gibt nicht die ursprünglichen Nutzdaten 18 wieder. Gleiches gilt bei einer Änderung des Netzwerkes 12. Wird somit ein anderes Netzwerk verwendet, welches eine andere Topologie, eine abweichende Knotenzahl und/oder eine abweichende Initialisierung aufweist als das Netzwerk, welches zur Verschlüsselung herangezogen wurde, können ebenfalls die Nutzdaten nicht entschlüsselt werden.

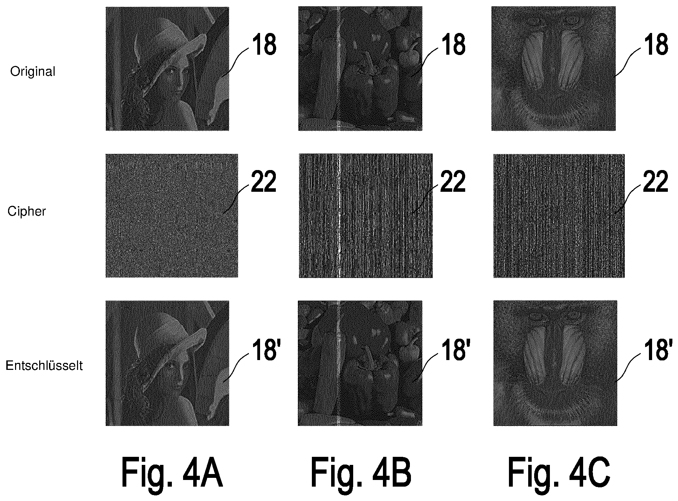

Figuren 4A-4C zeigen unterschiedliche Beispiele für Nutzdaten 18, die übertragenen Cipher-Informationen 22 und aus den übertragenen Cipher-Informationen entschlüsselten Nutzdaten 18'. Aus den Beispielen der Figuren 4A-4C ist ersichtlich, dass eine präzise Rekonstruktion der Nutzdaten möglich ist, wohingegen aus den Cipher-Informationen 22 keine Informationen über die Nutzdaten entnehmbar sind.

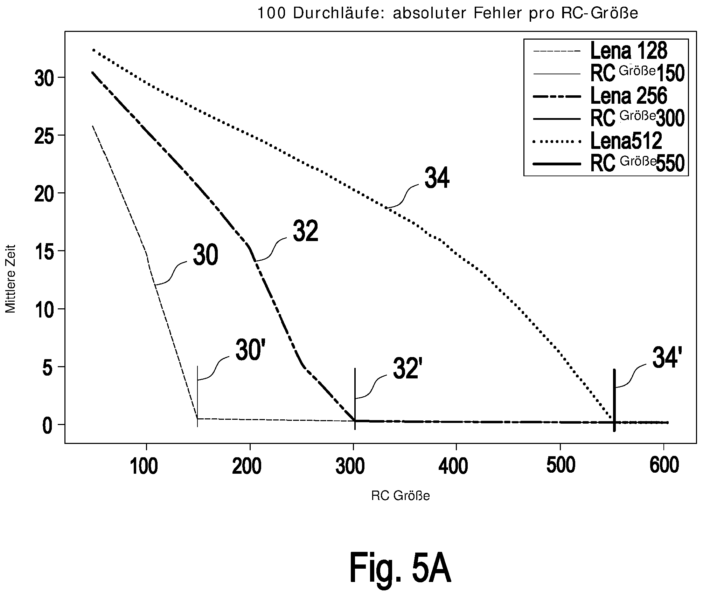

Für das Beispiel der Figur 4A zeigt die Figur 5A eine Fehleranalyse mit steigender Anzahl der Knoten des Netzwerks 12 bzw. 12'. Dabei zeigen die Kurven 30, 32, 34 die Fehlerentwicklung des Bildes der Figur 4A für jeweils unterschiedliche Auflösungen von 128x128, 256x256 und 512x512. Anhand der Markierungen 30', 32' und 34' ergibt sich, dass eine signifikante Fehlerreduzierung bei der Übertragung der Nutzdaten erreicht werden kann, sofern die Größe des Netzwerks größer ist als die Auflösung der Nutzdaten. So ergibt sich für eine Auflösung der Nutzdaten von 128x128 und einer Größe des Netzwerks von etwa 150 Knoten eine signifikante Fehlerreduzierung. Gleiches ergibt sich für eine Auflösung der Nutzdaten von 256x256 bei etwa einer Größe des Netzwerks von etwa 300 Knoten und bei einer Auflösung von 512x512 der Nutzdaten ab einer Größe des Netzwerks ab etwa 550 Knoten.

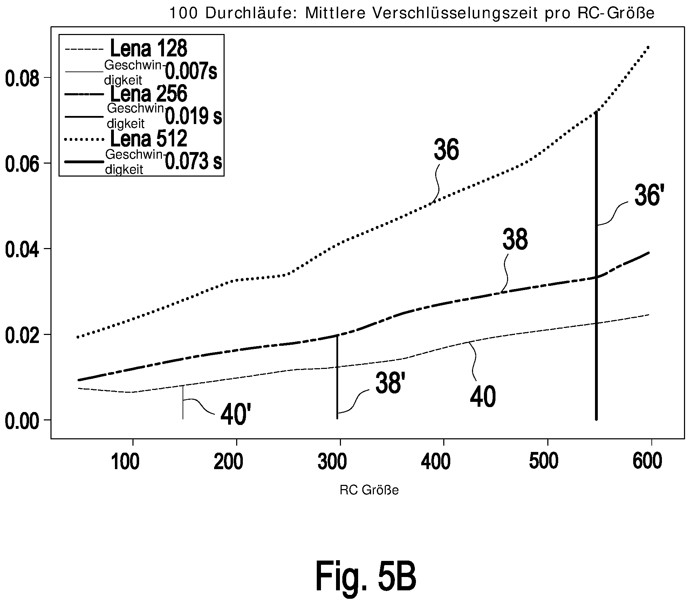

Figure 5B stellt für das Beispiel der Figur 4A die Verschlüsselungszeit dar für unterschiedliche Größen des Netzwerkes. So zeigt die Kurve 36 die benötigte Zeit für die Verschlüsselung der Nutzdaten bei einer Auflösung von 512x512. Für eine Größe des Netzwerks von 550 Knoten, welche gerade der Größe der signifikanten Fehlerreduzierung gemäß der Figur 5A entspricht (markiert in der Figur 5B durch die Markierung 36'), ergibt sich eine Verschlüsselungszeit von 0,073 sek. Dies ist um einen Faktor 10 bis 132 schneller als bisherige Verschlüsselungsverfahren, welche auf rekurrenten neuronalen Netzwerken basieren und um bis zu einen Faktor 280 schneller als die auf Chaos basierende hyperchaotische Map-Verschlüsselungsverfahren.

Kurve 38 zeigt die Verschlüsselungzeit für unterschiedliche Netzwerkgrößen für eine Auflösung der Nutzdaten von 256x256, wobei sich für eine Netzwerkgröße von 300 Knoten gemäß der Markierung 38', korrespondierend zu der Netzwerkgröße an der Markierung 33' der Figur 5A, eine Verschlüsselungszeit von 0,019 sek. ergibt. Kurve 40 zeigt die Verschlüsselungszeit für eine Auflösung der Nutzdaten von 128x128, wobei an der Markierung 40', korrespondierend zu der Netzwerkgröße entsprechend der Markierung 30' der Figur 5A, eine Verschlüsselungszeit von 0,007 sek. ergibt.

Somit ist ein schnelles und effizientes Verschlüsselungsverfahren geschaffen, mit dem auch große Mengen an Nutzdaten sicher verschlüsselt werden können. Gleichzeitig werden keine Nutzdaten vom Sender an den Empfänger übertragen, da lediglich die Gewichtungen der einzelnen Knoten der Ausgabeschicht des Netzwerks bzw. die entsprechenden $W_{out}$ übertragen werden. Somit ist das vorliegende Verfahren sicher. Gleichzeitig wird aufgrund der Verwendung eines Bildes/Matrix als Schlüssel ein ausreichend großer Schlüssel verwendet, welcher ebenfalls die Sicherheit erhöht.

**Patentansprüche**

1. Verfahren zur Verschlüsselung von Nutzdaten, insbesondere von Bildern, mit den Schritten:

   Bereitstellen eines Schlüssels, wobei insbesondere der Schlüssel ein Vektor oder eine Matrix ist;
   Bereitstellen eines Netzwerks mit N Knoten und initialen Gewichtungen;
   Bereitstellen von Nutzdaten;
   **gekennzeichnet durch**
   Trainieren des Netzwerks unter Eingabe des Schlüssels auf die Nutzdaten; und
   Erstellen einer Cipher-Information aus den Gewichtungen der Knoten des Netzwerks.

2. Verfahren nach Anspruch 1, bei welchen es sich bei dem Schlüssel um eine Bild oder einen Frame eines Bilder-Streams oder ein Schlüsselobjekt handelt.

3. Verfahren nach Anspruch 1 oder 2, bei welchem es sich bei den Nutzdaten um ein Bild oder einen oder mehrere Frames eines Bilder-Streams, oder Audio-Daten handelt.

4. Verfahren nach einem der Ansprüche 1 bis 3, bei welchem das Netzwerk mehr als 30, insbesondere mehr als 500 Knoten aufweist.

5. Verfahren nach einem der Ansprüche 1 bis 4, bei welchem die Anzahl N der Knoten des Netzwerks größer ist als Zeilengröße/Spaltengröße des Schlüssels.

6. Verfahren nach einem der Ansprüche 1 bis 5, bei welchem das Netzwerk trainiert wird mittels Ridge Regression.

7. Verfahren nach einem der Ansprüche 1 bis 6, bei welchem das Netzwerk spaltenweise trainiert wird.

8. Verfahren nach Anspruch 7, bei welchem der Schlüssel spaltenweise angewendet wird auf das Netzwerk zum Trainieren des Netzwerks auf eine entsprechende Spalte der Nutzdaten, wobei insbesondere

$$\|W_{out}r_i - m_i\|^2 + \lambda\|W_{out}\|^2$$

minimiert wird, wobei $r_i$ die Gewichtungen der Knoten des Netzwerks für die $i$-te Spalte der Nutzdaten, $W_{out}$ die spaltenweise Ausgabe des Netzwerks, $m_i$ die Spalten der Nutzdaten und $\lambda$ ein Regularisierungsfaktor bezeichnen.

9. Verfahren nach einem der Ansprüche 1 bis 8, bei welchem die Gewichtungen der Knoten des Netzwerks anhand einer Updatevorschrift angepasst werden, wobei es sich bei der Updatevorschrift um eine Funktion oder eine Zuordnung handelt

10. Verfahren zur Entschlüsselung von Nutzdaten, insbesondere von Bildern, mit den Schritten:

Bereitstellen einer Cipher-Information, welche nach einem der Ansprüche 1 bis 9 erzeugt wurde,
Bereitstellen desselben Schlüssels;
Bereitstellen desselben Netzwerks; und
Anwenden des Schlüssels auf das Netzwerk unter Berücksichtigung der Cipher-Information zur Entschlüsselung der Nutzdaten.

11. Verfahren nach Anspruch 10, bei welchem das Anwenden des Schlüssels auf das Netzwerk unter Berücksichtigung der Cipher-Information zur Entschlüsselung der Nutzdaten erfolgt mittels Matrixmultiplikation des Schlüssels mit den Cipher-Information.

12. Verfahren zur verschlüsselten Übertragung von Nutzdaten mit den Schritten:

Erzeugen von Cipher-Informationen nach einem der Ansprüche 1 bis 9;
Übertragen der Cipher-Informationen an einen Empfänger;
Entschlüsseln der Nutzdaten gemäß einem der Ansprüche 10 oder 11.

13. Vorrichtung zur Verschlüsselung von Nutzdaten, wobei die Vorrichtung ausgebildet ist zur Durchführung des Verfahrens nach einem der Ansprüche 1 bis 9.

14. Vorrichtung zur Entschlüsselung von Nutzdaten, wobei die Vorrichtung ausgebildet ist zur Durchführung des Verfahrens nach einem der Ansprüche 10 oder 11.

**Claims**

1. A method for encrypting user data, in particular images, comprising the steps of:

providing a key, wherein the key is in particular a vector or a matrix;
providing a network having N nodes and initial weightings;
providing user data;
**characterized by**
training the network with respect to the user data with the key being inputted; and
producing cipher information from the weightings of the nodes of the network.

2. The method according to claim 1, wherein the key is an image or a frame of an image stream or a key object.

3. The method according to claim 1 or 2, wherein the user data are an image or one or a plurality of frames of an image stream or audio data.

4. The method according to any one of claims 1 to 3, wherein the network comprises more than 30, in particular more than 500 nodes.

5. The method according to any one of claims 1 to 4, wherein the number N of nodes of the network is larger than a line size/column size of the key.

6. The method according to any one of claims 1 to 5, wherein the network is trained by means of a ridge regression.

7. The method according to any one of claims 1 to 6, wherein the network is column-wise trained.

8. The method according to claim 7, wherein the key is column-wise applied to the network for training the network with respect to a corresponding column of the user data, wherein in particular

$$\|W_{out}r_i - m_i\|^2 + \lambda\|W_{out}\|^2$$

is minimized, wherein $r_i$ designates the weightings of the nodes of the network for the $i$th column of the user data, $W_{out}$ designates the column-wise output of the network, $m_i$ designates the columns of the user data and $\lambda$ designates a regulation factor.

9. The method according to any one of claims 1 to 8, wherein the weightings of the nodes of the network are adapted on the basis of an update specification, wherein the update specification is a function or an assignment.

10. A method for decrypting user data, in particular images, comprising the steps of:

providing cipher information generated according to any one of claims 1 to 9;
providing the same key;
providing the same network; and
applying the key to the network taking into consideration the cipher information for decrypting the user data.

11. The method according to claim 10, wherein the application of the key to the network taking into consideration the cipher information for decrypting the user data is performed by means a matrix multiplication of the key by the cipher information.

12. A method for encrypted transmission of user data, comprising the steps of:

generating cipher information according to any one of claims 1 to 9;
transmitting the cipher information to a receiver;
decrypting the user data according to any one of claims 10 or 11.

13. An apparatus for encrypting user data, wherein the apparatus is configured for performing the method according to any one of claims 1 to 9.

14. An apparatus for decrypting user data, wherein the apparatus is configured for performing the method according to any one of claims 10 or 11.

**Revendications**

1. Procédé de chiffrement des données utiles, en particulier d'images, avec les étapes :

de fourniture d'une clé, dans lequel la clé est en particulier un vecteur ou une matrice ;
de fourniture d'un réseau avec N nœuds et des pondérations initiales ; de fourniture de données utiles ; **caractérisé par**
l'entraînement du réseau en entrant la clé sur les données utiles ; et
la création d'une information de chiffrement à partir des pondérations des nœuds du réseau.

2. Procédé selon la revendication 1, dans lequel la clé est une image ou une trame d'un flux d'images, ou un objet clé.

3. Procédé selon la revendication 1 ou 2, dans lequel les données utiles sont une image ou en une ou plusieurs trames d'un flux d'images, ou en des données audio.

4. Procédé selon l'une quelconque des revendications 1 à 3, dans lequel le réseau présente plus de 30, en particulier plus de 500 nœuds.

5. Procédé selon l'une quelconque des revendications 1 à 4, dans lequel le nombre N des nœuds du réseau est supérieur à la taille de ligne/de colonne de la clé.

6. Procédé selon l'une quelconque des revendications 1 à 5, dans lequel le réseau est entraîné par régression de crête.

7. Procédé selon l'une quelconque des revendications 1 à 6, dans lequel le réseau est entraîné par colonnes.

8. Procédé selon la revendication 7, dans lequel la clé est appliquée colonne par colonne au réseau pour entraîner le réseau sur une colonne correspondante des données utiles, dans lequel en particulier

$$\|W_{out}r_i - m_i\|^2 + \lambda\|W_{out}\|^2$$

est minimisé, dans lequel $r_i$ désigne les pondérations des nœuds du réseau pour la ième colonne des données utiles, $W_{out}$ la sortie par colonne du réseau, $m_i$ les colonnes des données utiles et $\lambda$ un facteur de régularisation.

9. Procédé selon l'une quelconque des revendications 1 à 8, dans lequel les pondérations des nœuds du réseau sont adaptées à l'aide d'une prescription de mise à jour, dans lequel la prescription de mise à jour est une fonction ou une attribution

10. Procédé de déchiffrement de données utiles, en particulier d'images, avec les étapes :

de fourniture d'une information de chiffrement qui a été générée selon l'une quelconque des revendications 1 à 9,
de fourniture de la même clé ;
de fourniture du même réseau ;
et
d'application de la clé au réseau en tenant compte de l'information de chiffrement pour déchiffrer les données utiles.

11. Procédé selon la revendication 10, dans lequel l'application de la clé sur le réseau est effectuée en tenant compte de l'information de chiffrement pour déchiffrer les données utiles, par multiplication matricielle de la clé avec l'information de chiffrement.

12. Procédé de transmission cryptée de données utiles avec les étapes :

de génération d'informations de chiffrement selon l'une quelconque des revendications 1 à 9 ;
de transmission des informations de chiffrement à un destinataire ;
de déchiffrement des données utiles selon l'une quelconque des revendications 10 ou 11.

13. Dispositif de chiffrement de données utiles, dans lequel le dispositif est réalisé pour mettre en œuvre le procédé selon l'une quelconque des revendications 1 à 9.

14. Dispositif de déchiffrement de données utiles, dans lequel le dispositif est réalisé pour mettre en œuvre le procédé selon l'une quelconque des revendications 10 ou 11.

Bereitstellen eines Schlüssels — S01

Bereitstellen eines Netzwerks mit N Knoten — S02

Bereitstellen von Nutzdaten — S03

Trainieren des Netzwerks unter Eingabe des Schlüssels auf die Nutzdaten — S04

Erstellen einer Cipher-Information aus den Gewichtungen der Knoten des Netzwerks — S05

Fig. 1

```
                                                    ┌─ S11
┌─────────────────────────────────────────────┐   │
│   Bereitstellen einer Cipher-Information      │
└─────────────────────────────────────────────┘
                      │
                                                    ┌─ S12
┌─────────────────────────────────────────────┐   │
│      Bereitstellen desselben Schlüssels        │
└─────────────────────────────────────────────┘
                      │
                                                    ┌─ S13
┌─────────────────────────────────────────────┐   │
│      Bereitstellen desselben Netzwerks         │
└─────────────────────────────────────────────┘
                      │
                                                    ┌─ S14
┌─────────────────────────────────────────────┐   │
│  Anwenden des Schlüssels auf das Netzwerk     │
│ unter Berücksichtigung der Cipher-Information │
│      zur Entschlüsselung der Nutzdaten         │
└─────────────────────────────────────────────┘
```

# Fig. 2

**VERSCHLÜSSELUNG** 10

Schlüssel

12 $r_i$ 16

**BILD** 18

$m_i$

$W_{out}$

14 20

22

Senden 24

**ENTSCHLÜSSELUNG** 10' 12'

Schlüssel

22'

MATRIX-MULTIPLIKATION

Entschlüsseltes Bild

18'

26

Fig. 3

EP 4 454 202 B1

Fig. 4A  Fig. 4B  Fig. 4C

Fig. 5A

100 Durchläufe: Mittlere Verschlüsselungszeit pro RC-Größe

Fig. 5B

Senden $W_{out}$

Entschlüsselung

Schlüssel

falscher Schlüssel

**Fig. 6**

EP 4 454 202 B1